**Europäisches Patentamt**

**European Patent Office**

**Office européen des brevets**

(19)

(11) Veröffentlichungsnummer: **0 060 548**
**B1**

(12) EUROPÄISCHE PATENTSCHRIFT

(45) Veröffentlichungstag der Patentschrift:
**29.01.86**

(51) Int. Cl.⁴: **G 01 M 3/32**

(21) Anmeldenummer: **82102094.8**

(22) Anmeldetag: **15.03.82**

(54) **Verfahren und Vorrichtung zur Dichtheitsprüfung elektrischer Bauelemente.**

(30) Priorität: **18.03.81 DE 3110575**

(43) Veröffentlichungstag der Anmeldung:
**22.09.82 Patentblatt 82/38**

(45) Bekanntmachung des Hinweises auf die Patenterteilung:
**29.01.86 Patentblatt 86/5**

(84) Benannte Vertragsstaaten:
**CH DE FR GB LI**

(56) Entgegenhaltungen:
**DE - A - 1 473 363**
**DE - A - 2 458 137**
**US - A - 2 467 767**
**US - A - 3 517 548**
**US - A - 3 792 607**

(73) Patentinhaber: **Siemens Aktiengesellschaft, Berlin und München Witteisbacherplatz 2, D-8000 München 2 (DE)**

(72) Erfinder: **Stadler, Heinz, Mettnauer Strasse 19, D-8000 München 60 (DE)**
Erfinder: **Heinzl, Alfred, Ing. grad., Geigenbergerstrasse 29, D-8000 München 71 (DE)**

## Beschreibung

Die Erfindung bezieht sich auf ein Verfahren zur Dichtheitsprüfung elektrischer, einen Innenhohlraum in einem geschlossenen Gehäuse aufweisenden Bauelemente, wobei jeweils das zu prüfende Bauelement in einen mit einem Zylinder in Verbindung stehenden Rezipienten eingebracht und durch Verschieben eines Kolbens in dem Zylinder eine Druckänderung in dem Rezipienten hervorgerufen wird, wobei dann nach einer vorgegebenen Zeitspanne der Druck in dem Rezipienten gemessen, mit einem vorgegebenen Sollwert verglichen und eine Abweichung des gemessenen Drucks von dem Sollwert bzw. die Einhaltung des Sollwerts angezeigt wird und eine Vorrichtung zur Durchführung eines solchen Verfahrens gemäss dem Oberbegriff des Anspruchs 6.

Die Gehäuse elektromechanischer Bauelemente, wie Relais, werden vielfach durch Verschweissen, Vergiessen oder auf andere Weise abgedichtet, um die innenliegenden Kontakte vor schädlichen Umwelteinflüssen zu schützen. Nach dem Verschliessen des Gehäuses müssen diese Bauelemente auf Dichtigkeit geprüft werden. Hierbei war es bisher üblich, derartige Bauelemente, also beispielsweise Relais, in einem Wasserbad zu prüfen, wobei aufsteigende Luftblasen ein Leck anzeigten. Die Überwachung solcher Luftbläschen ist jedoch kaum automatisierbar. Überdies hat das Wasserbad den Nachteil, dass das Wasser in undichte Gehäuse eindringt und das Bauelement unbrauchbar macht, obwohl es funktionell völlig in Ordnung gewesen wäre und durch eine einfache Nacharbeit auch die geforderte Dichtigkeit erhalten könnte.

Die US-PS 3 517 548 zeigt eine Anordnung zur Dichtheitsprüfung elektronischer Bauelemente, die aus einem Rezipienten besteht, der lediglich zu einem einstückig angeformten Zylinder hin offen ist. In diesen wird ein Kolben eingeführt, auf dessen Stirnseite sich das zu messende Bauelement befindet. Während der Einschubbewegung des Kolbens in den Zylinder wird letzterer abgedichtet, und im letzten Teil der Kolbenbewegung wird die Luft im Zylinder und im Rezipienten komprimiert. Eine Kraftmessdose bestimmt den Druck im Rezipienten, der zu diesem Zweck lose verschiebbar gelagert ist. Bei der bekannten Anordnung bzw. bei dem bekannten Verfahren erfolgt also das Einbringen des zu prüfenden Bauelementes in den Rezipienten gleichzeitig mit der zur Druckänderung vorgesehenen Kolbenbewegung.

Gemäss diesem bekannten Verfahren wird ausschliesslich mit Überdruck gearbeitet, wobei sich dieser beim Einschieben des Kolbens in den Zylinder ergibt. Eine solche Prüfung ist nicht in allen Fällen zweckmässig und erwünscht. Insbesondere kann es Bauelemente geben, die gegen Überdruck empfindlich sind oder bei denen sich ein Leck erst im Vakuum zeigt.

Es ist für die Messgenauigkeit von entscheidender Bedeutung, mit dem Kolben den Zylinder an einer genau definierten Stelle abzudichten. Dies hängt aber vom Zustand eines dem Verschleiss unterliegenden Dichtringes ab. Aufgrund der beweglichen Lagerung der Einheit Rezipient-Zylinder ist ihre Position bei der Endstellung des Kolbens nicht genau bestimmt. Das Volumen des Rezipienten in der Messstellung ist somit kleinen Schwankungen unterworfen. Darüber hinaus ist die indirekte Druckmessung über eine Kraftmessdose mit Messfehlern behaftet, die sich beispielsweise aus der Reibung zwischen dem Kolben und dem Zylinder sowie zwischen dem Rezipienten und seiner Lagerung ergeben.

Die Erfindung hat es sich zur Aufgabe gemacht, ein Messverfahren und eine Vorrichtung der eingangs genannten Art zu schaffen, welche Messungen sowohl mit Überdruck als auch mit Unterdruck gestatten und bei denen Undichtigkeiten des Bauelementes durch grössere Messgenauigkeit sicherer erkannt werden können.

Erfindungsgemäss wird die Aufgabe verfahrensseitig dadurch gelöst, dass der Kolben bei Einbringen des Bauelementes in den Rezipienten in einer definierten Ruheposition innerhalb des Zylinders gehalten wird, dass nach dem Schliessen des Rezipienten der Kolben in eine Arbeitsposition verschoben wird und dass nach der vorgegebenen Zeitspanne der Druck im Rezipienten durch einen pneumatisch-elektrischen Wandler gemessen wird. Die erfindungsgemässe Vorrichtung ist im Anspruch 6 gekennzeichnet.

Das erfindungsgemässe Verfahren arbeitet also mit einem Rezipienten, der nach Beschickung mit dem Zylinder abdichtend verbunden wird, wobei sich der Kolben in einer definierten Ruhestellung befindet. Auf diese Weise beginnt die Messung der Druckänderung mit einem genau definierten Gasvolumen. Erst nach dem Schliessen des Rezipienten wird der Kolben in Bewegung gesetzt und in seine Arbeitsposition verschoben. Somit liegt nach dem Verschieben des Kolbens wiederum ein genau definiertes Volumen vor, da der Rezipient selbst unbeweglich ist. Schliesslich wird der Gasdruck im Rezipienten über einen angeschlossenen pneumatisch-elektrischen Wandler direkt gemessen, wodurch weitere verfälschende Nebeneffekte vermieden werden.

Ausgestaltungen und Weiterbildungen des erfindungsgemässen Verfahrens sowie der erfindungsgemässen Vorrichtung sind in den entsprechenden Unteransprüchen angegeben. Es ist besonders vorteilhaft, dem Kolben zwei Arbeitsstellungen zuzuordnen, wobei er in einem ersten Schritt lediglich bis zu einer ersten Arbeitsstellung verschoben wird und erst nach einer bestimmten Wartezeit in die Endstellung gebracht wird. Auf diese Weise wird eine Hysteresewirkung der Druckänderung weitgehend vermieden. Durch diese zusätzliche Verschiebung spricht die Leckanzeige erst an, wenn das Bauelement wirklich undicht war.

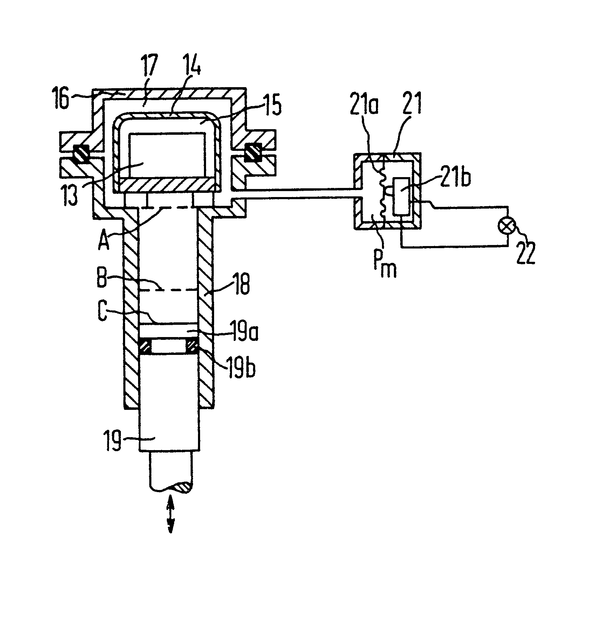

Nachfolgend wird anhand der Zeichnung eine Vorrichtung zur Durchführung des erfindungsgemässen Verfahrens beschrieben. Die Figur zeigt eine Vorrichtung zur Dichtheitsprüfung mit einem Rezipienten und einem verschiebbaren Kolben.

Das dabei anzuwendende Messverfahren gemäss der Erfindung wird im folgenden anhand einer Prüfung mit Unterdruck beschrieben; doch wäre auch eine Verwendung von Überdruck analog anwendbar.

Bei diesem Ausführungsbeispiel befindet sich ein Bauelement 13 mit einem dichten Gehäuse 14 und einem Innenhohlraum 15 in einem Rezipienten 16 mit einem definierten Innenraum 17. An dem Rezipienten 16 ist ein Zylinder 18 als Führung für einen Kolben 19 angeformt. Der Zylinderinnenraum 20 kann durch die Bewegung des Kolbens 19 variiert werden. Ausserdem ist an dem Rezipienten 16 ein pneumatisch-elektrischer Wandler 21 angeschlossen. Dieser pneumatisch-elektrische Wandler besitzt einen Faltenbalg 21a, welcher auf einem Schalter 21b wirkt. Unterschreitet der Messdruck $P_m$ an der Anschlussseite des Wandlers 21 einen vorgegebenen Sollwert, so betätigt der Faltenbalg 21a den Schalter 21b und gibt ein elektrisches Signal ab, mit welchem eine Lampe 22 oder ein anderes Anzeigegerät in Betrieb gesetzt wird.

Für die Stirnfläche 19a des mit einem Dichtungsring 19b abgedichteten Kolbens sind drei Stellungen A, B und C vorgesehen. Die Ausgangsstellung des Kolbens 19 zu Beginn der Dichtheitsprüfung ist die Stellung A. Ist der Rezipient 16 geschlossen, so wird der Kolben 19 zur Erzeugung eines Vorvakuums in die Stellung B gebracht. Dieses Vorvakuum wirkt eine vorgegebene Zeit auf das Bauelement 13. Hat das Bauelement ein Leck, so strömt die Luft aus dem Hohlraum 15 in den Rezipientenraum 17, und der Druck erhöht sich. Ist das Bauelement dagegen leckfrei, so bleibt der eingestellte Druck gleich.

Anschliessend wird der Kolben 19 in die Stellung C gebracht. Bei einem leckfreien Bauelement 13 gibt nun der pneumatisch-elektrische Wandler 21 ein Signal ab. Bei einem Bauelement mit Leck wird das zum Schalten benötigte Vakuum nicht erreicht, und das Signal unterbleibt.

Bei dieser Messanordnung wird die Auswirkung der Hysterese des Wandlers 21 umgangen. Wird dagegen der Kolben 19 sogleich von der Stellung A in die Stellung C gebracht, so schaltet der Wandler in jedem Fall zunächst durch. Er schaltet dann bei einem undichten Bauelement erst zurück bei einem Druckanstieg, der der Hysterese des Wandlers entspricht. Die Prüfgenauigkeit ist hierbei abhängig von der Grösse der Hysterese.

## Patentansprüche

1. Verfahren zur Dichtheitsprüfung elektrischer, einen Innenhohlraum (15) in einem geschlossenen Gehäuse (14) aufweisender Bauelemente (13), wobei jeweils das zu prüfende Bauelement (13), in einen mit einem Zylinder (18) in Verbindung stehenden Rezipienten (16) eingebracht und durch Verschieben eines Kolbens (19) in dem Zylinder (18) eine Druckänderung in dem Rezipienten (16) hervorgerufen wird, wobei dann nach einer vorgegebenen Zeitspanne der Druck in dem Rezipienten (16) gemessen, mit einem vorgegebenen Sollwert verglichen und eine Abweichung des gemessenen Drucks von dem Sollwert bzw. die Einhaltung des Sollwertes angezeigt wird, dadurch gekennzeichnet, dass der Kolben (19) beim Einbringen des Bauelementes (13) in den Rezipienten (16) in einer definierten Ruheposition (A) innerhalb des Zylinders (18) gehalten wird, dass nach dem Schliessen des Rezipienten (16) der Kolben (19) in eine Arbeitsposition (B, C) verschoben wird und dass nach der vorgegebenen Zeitspanne der Druck im Rezipienten (16) durch einen pneumatisch-elektrischen Wandler (21) gemessen wird.

2. Verfahren nach Anspruch 1, dadurch gekennzeichnet, dass durch Verschieben des Kolbens (19) in Richtung auf den Rezipienten (16) in letzterem ein Überdruck erzeugt wird und dass bei Unterschreiten eines Sollwertes ein Leck angezeigt wird.

3. Verfahren nach Anspruch 1, dadurch gekennzeichnet, dass durch Verschieben des Kolbens (19) in eine von dem Rezipienten (16) entferntere Stellung in letzterem ein Unterdruck erzeugt wird und dass bei Überschreiten eines Sollwertes ein Leck angezeigt wird.

4. Verfahren nach einem der Ansprüche 1 bis 3, dadurch gekennzeichnet, dass der Rezipient (16) erst nach der vorgegebenen Zeitspanne mit dem pneumatisch-elektrischen Wandler (21) verbunden wird.

5. Verfahren nach einem der Ansprüche 1 bis 3, dadurch gekennzeichnet, dass der Kolben (19) zunächst nur soweit verschoben wird, dass die Druckänderung unterhalb des Sollwertes bleibt und dass nach Ablauf der vorgegebenen Zeitspanne eine weitere Verschiebung des Kolbens (19) vorgenommen wird.

6. Vorrichtung zur Durchführung des Verfahrens nach einem der vorherigen Ansprüche, mit einem das zu prüfende Bauelement (13) aufnehmenden Rezipienten (16), einem mit dem Rezipienten (16) verbundenen Zylinder (18) und einem in dem Zylinder (18) verschiebbaren Kolben (19) und mit einer Vorrichtung zur Messung des Druckes und Anzeige des gemessenen Druckes (22), dadurch gekennzeichnet, dass der Kolben (19) sowohl in einer Ruhestellung (A) als auch in mindestens einer Arbeitsstellung (B, C) abdichtend in dem Zylinder (18) angeordnet ist, dass der Rezipient (16) bei Ruhestellung (A) des Kolbens (19) zur Aufnahme des Bauelementes (13) geöffnet und geschlossen werden kann und dass der Rezipient (16) mit einem pneumatisch-elektrischen Wandler (21) als Druckmessvorrichtung verbunden ist.

7. Vorrichtung nach Anspruch 6, dadurch gekennzeichnet, dass der Kolben (19) in dem Zylinder (18) drei definierte Stellungen (A, B, C) besitzt.

## Claims

1. A process for leak testing electric components (13) which have an inner hollow space (15) in a sealed housing (14), wherein the component (13) to be tested is inserted into a recipient (16) connected to a cylinder (18), and a change of pressure is brought about in the recipient (16) by displacing a piston (19) in the cylinder (18), wherein after a predetermined time interval the pressure in the recipient (16) is measured by comparison with a predetermined theoretical value, and a deviation of the measured pressure from the theoretical value or the observation of the theoretical value, as the case may be, is indicated, characterised in that during the insertion of the component (13) into the recipient (16) the piston (19) is retained in a defined rest position (A) within the cylinder (18), that when the recipient (16) has been closed the piston (19) is displaced into an operating position (B, C) and that after the predetermined time interval the pressure in the recipient (16) is measured by a pneumatic-electric transducer (21).

2. A process as claimed in Claim 1, characterised in that by displacing the piston (19) in the direction of the recipient (16) excess pressure is produced in the latter and that a leak is indicated if a theoretical value is undershot.

3. A process as claimed in Claim 1, characterised in that by displacing the piston (19) into a position further away from the recipient (16) a pressure-reduction is produced in the latter and that a leak is indicated if a theoretical value is overshot.

4. A process as claimed in one of Claims 1 to 3, characterised in that the recipient (16) is only connected to the pneumatic-electric transducer (21) after the predetermined time interval.

5. A process as claimed in one of Claims 1 to 3, characterised in that the piston (19) is firstly only displaced to such an extent that the change of pressure remains below the theoretical value, and that a further displacement of the piston (19) is carried out after the expiration of the predetermined time interval.

6. A device for the implementation of the process as claimed in one of the preceding Claims, comprising a recipient (16), which houses the component (18) to be tested, a cylinder (18) which is connected to the recipient (16), a piston (19) displaceable in the cylinder (18) and a device for measuring the pressure and displaying the measured pressure (22), characterised in that the piston (19) is arranged in the cylinder (18) in sealed fashion both in a rest position (A) and also in at least one operating position (B, C), that in the rest position (A) of the piston (19) the recipient (16) can be opened and closed in order to receive the component (13), and that the recipient (16) is connected to a pneumatic-electric transducer (21) as a pressure measuring device.

7. A device as claimed in Claim 6, characterised in that the piston (19) in the cylinder (18) has three defined positions (A, B, C).

## Revendications

1. Procédé pour contrôler l'étanchéité de composants électriques (13) comportant une cavité intérieure (15) située dans un boîtier fermé (14), selon lequel on place le composant respectif à contrôler (13) dans une enceinte (16) reliée à un cylindre (18) et on réalise une modification de la pression dans l'enceinte (16) par déplacement d'un piston, et selon lequel au bout d'un intervalle de temps prédéterminé, la pression dans l'enceinte (16) est mesurée, est comparée à une valeur de consigne prédéterminée et un écart entre la pression mesurée et la valeur de consigne ou le respect de la valeur de consigne est affiché, caractérisé par le fait que lors de l'insertion du composant (13) dans l'enceinte (16), le piston (19) est maintenu dans une position de repos définie (A) à l'intérieur du cylindre (18), qu'après la fermeture de l'enceinte (16), on déplace le piston (19) pour l'amener dans une position de travail (B, C) et qu'après l'intervalle de temps prédéterminé, on mesure la pression dans l'enceinte (16) à l'aide d'un transducteur pneumatique-électrique (21).

2. Procédé suivant la revendication 1, caractérisé par le fait qu'une surpression est produite dans l'enceinte (16) sous l'effet du déplacement du piston (19) en direction de l'enceinte (16) et que dans le cas où la pression tombe au-dessous d'une valeur de consigne, une fuite est affichée.

3. Procédé suivant la revendication 1, caractérisé par le fait qu'une dépression est produite dans l'enceinte (16) sous l'effet du déplacement du piston (19) venant dans une position éloignée de l'enceinte (16) et que, dans le cas où une valeur de consigne est dépassée, une fuite est affichée.

4. Procédé suivant l'une des revendications 1 à 3, caractérisé par le fait que l'enceinte (16) n'est reliée au convertisseur pneumatique-électrique (21) qu'au bout de l'intervalle de temps prédéterminé.

5. Procédé suivant l'une des revendications 1 à 3, caractérisé par le fait qu'on déplace tout d'abord le piston (19) seulement suffisamment pour que la modification de la pression reste au-dessous de la valeur de consigne et qu'après l'écoulement de l'intervalle de temps prédéterminé, on réalise un déplacement supplémentaire du piston (19).

6. Dispositif pour la mise en œuvre du procédé suivant l'une des revendications précédentes, comportant une enceinte (16) recevant le composant devant être contrôlé (13), un cylindre (18) relié à l'enceinte (16) et un piston (19) déplaçable dans le cylindre (18), et un dispositif servant à mesurer la pression et à afficher la pression mesurée (22), caractérisé par le fait que le piston (19) est disposé de manière étanche dans le cylindre (18) aussi bien dans une position de repos (A) que dans au moins une position de travail (B, C), que lorsque le piston (19) est dans la position de repos (A), l'enceinte (16) peut être ouverte et fermée en vue de recevoir le composant (13) et que l'enceinte (16) est reliée à un transducteur pneumatique-électrique (21) servant de dispositif de mesure de la pression.

7. Dispositif suivant la revendication 6, caractérisé par le fait que le piston (19) possède dans le cylindre (18) trois positions (A, B, C) définies.